(19) Europäisches Patentamt
European Patent Office
Office européen des brevets

(11) **EP 4 508 984 A1**

(12) **EUROPEAN PATENT APPLICATION**

(43) Date of publication:
**19.02.2025 Bulletin 2025/08**

(21) Application number: **23191677.6**

(22) Date of filing: **16.08.2023**

(51) International Patent Classification (IPC):
*A23G 9/36* (2006.01)    *A23G 9/38* (2006.01)
*A23G 9/04* (2006.01)    *A23J 3/20* (2006.01)
*A23L 29/00* (2016.01)    *A23L 33/195* (2016.01)
*A23C 11/06* (2025.01)    *A23J 1/00* (2006.01)
*A23G 9/46* (2006.01)    *A23L 33/185* (2016.01)

(52) Cooperative Patent Classification (CPC):
**A23G 9/04; A23C 11/065; A23G 9/36; A23G 9/38;**
**A23J 1/008; A23J 3/20; A23L 29/065;**
**A23L 33/195;** A23G 9/46; A23L 33/185;
A23V 2250/5488

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Unilever IP Holdings B.V.**
**3013 AL Rotterdam (NL)**

(72) Inventors:
• **NANDI, Asish**
**6708 WH Wageningen (NL)**
• **NEVILLE, Michelle Elizabeth**
**6708 WH Wageningen (NL)**
• **WILSON, Stephen**
**6708 WH Wageningen (NL)**

(74) Representative: **Askew, Sarah Elizabeth**
**Unilever Patent Group**
**Bronland 14**
**6708 WH Wageningen (NL)**

(54) **NON-DAIRY FROZEN CONFECTION**

(57) The present invention relates to a non-dairy frozen confection comprising mycoprotein biomass in an amount of 0.1 to 2.5 wt%, wherein the mycoprotein biomass comprises mycoprotein fibrils having a fibril length of less than 50 $\mu$m.

# Fig. 2a

EP 4 508 984 A1

Description

**Field of the invention**

The invention relates to non-dairy frozen confections, in particular to non-dairy frozen confections which comprise fungal protein.

**Background of the invention**

Foods which are free from animal products are a growing consumer trend, which is thought to be driven by increasing health and environmental consciousness. As a result, there is currently an increased consumer demand for frozen confections which are not based on dairy ingredients.

Frozen confections where some or all of the dairy ingredients have been replaced with plant-based ingredients are commercially available. For instance, pulse protein (such as soy protein or pea protein) is becoming more widely used in frozen confections. However, the flavour and texture of frozen confections formulated with certain pulse proteins is still unappealing to some consumers. In particular, their widespread acceptance is hindered by issues around their taste, since pulse proteins tend to have an inherent taste that formulators must mask in order to create a neutral product base.

WO 02/089604 A2 relates to a solid food ingredient comprising edible fungal particles, which may be combined with other ingredients to provide a range of foodstuffs. The foodstuff may be a dairy product, for example an ice-cream type dessert, and Example 5 discloses ice-cream type desserts made using a combination of mycoprotein paste and skim milk powder. The disclosed invention is said to be based on the fact that edible fungi can act as fat mimetics.

There is consumer demand for frozen confections that are dairy-free, but with the creamy mouthfeel and texture of regular ice cream. Therefore, there remains a need for improved formulations for non-dairy frozen confections which overcome one or more of the drawbacks associated with the current formulations.

**Summary of the invention**

We have found that non-dairy frozen confections with good organoleptic properties can be formulated using mycoprotein. Thus, in a first aspect the present invention is directed to a non-dairy frozen confection comprising mycoprotein biomass in an amount of 0.1 to 2.5 wt%, wherein the mycoprotein biomass comprises mycoprotein fibrils having a fibril length of less than 50 $\mu$m.

A convenient way to produce mycoprotein fibrils having a fibril length of less than 50 $\mu$m is to microfluidise a suspension of mycoprotein biomass. Thus, in a second aspect, the invention relates to a process for preparing a non-dairy frozen confection as claimed in the first aspect, and which comprises the steps of:

(a) microfluidising a suspension of mycoprotein biomass to provide mycoprotein biomass that comprises mycoprotein fibrils having a fibril length of less than 50 $\mu$m;
(b) combining the mycoprotein biomass with one or more additional frozen confection ingredients to provide a frozen confection premix; and
(c) freezing the premix.

In a third aspect, the present invention relates to use of mycoprotein biomass to prepare a frozen confection, wherein the mycoprotein biomass comprises mycoprotein fibrils having a fibril length of less than 50 $\mu$m.

**Detailed description of the invention**

The present invention relates to a non-dairy frozen confection. As used herein the term non-dairy means that the frozen confection does not comprise any ingredients derived from milk, including milk protein and butterfat. Furthermore, it is preferred that the frozen confection is essentially free of animal-derived ingredients (such as egg yolk), and thus comprises animal-derived ingredients in an amount of less than 0.1 wt%, preferably less than 0.05 wt%, more preferably less than 0.01 wt%, most preferably 0 wt%.

As used herein, the term "mycoprotein biomass" refers to biomass obtained from fungal mycelium, for example from *Fusarium venenatum.* Mycoprotein biomass is typically produced by fermentation, and is commercially available (e.g. ABUNDA mycoprotein from Enough Foods). The mycoprotein biomass will contain a significant amount of protein. For example, the mycoprotein biomass preferably comprises protein in an amount of at least 40 wt%, at least 45 wt%, or even at least 50 wt% by dry weight. The mycoprotein biomass typically comprises protein in an amount of no more than 65 wt%, or no more than 60 wt%, or even no more than 55 wt% by dry weight.

In addition to mycoprotein, the mycoprotein biomass may comprise one or more of: carbohydrate, dietary fibre, and fat. For example, the mycoprotein biomass may comprise carbohydrate in an amount of 7.5 wt% to 25 wt%, or even 10 wt% to 20 wt% by dry weight. The mycoprotein biomass preferably comprises dietary fibre in an amount of 7.5 wt% to 25 wt%, or even 10 wt% to 20 wt% by dry weight. The mycoprotein biomass is a low-fat material. For example, the mycoprotein biomass preferably comprises fat in an amount of 1 to 8 wt%, 2 to 7 wt%, or even 3 to 5 wt% by dry weight.

The non-dairy frozen confection comprises mycoprotein biomass. High amounts of mycoprotein biomass may affect certain organoleptic properties of the frozen confection, for example via the introduction of off-flavours. Thus, the non-dairy frozen confection comprises comprising the mycoprotein biomass in an amount of no more than 2.5 wt%, and preferably no more than 2 wt%, no more than 1.5 wt%, or even no more than 1.25 wt%. On the other hand, low amounts of mycoprotein biomass can have a negative impact on the texture of the frozen confection. Therefore, the non-dairy frozen confection comprises comprising the mycoprotein biomass in an amount of at least 0.1 wt%, and preferably at least 0.25 wt%, or even at least 0.5 wt%

The mycoprotein biomass comprises fibrils having a fibril length of less than 50 $\mu$m, preferably 10 to 40 $\mu$m, or even 10 to 30 $\mu$m. The fibril length can be determined via confocal microscopy. Preferably at least 50% of the fibrils have the specified fibril length, more preferably at least 60%, at least 70%, or even at least 80%. Up to 100% of the fibrils have the specified fibril length. Without wishing to be bound by theory, a relatively short fibril length is thought to help stabilize the microstructure of the frozen confection. Preferably, the fibrils have an aspect ratio (length : width) of 10:1 to 2:1, 8:1 to 2:1, or even 6:1 to 2:1. For example, the fibrils may have an aspect ratio of 10:1 to 3:1, 8:1 to 3:1, or even 6:1 to 3:1. Preferably, at least 50%, at least 60%, at least 70% or even at least 80% of the fibrils have the specified aspect ratio. Up to 100% of the fibrils have the specified aspect ratio.

Although by no means essential, it is possible for the frozen confection to additionally comprise plant protein. For example, the frozen confection may preferably comprise plant protein in an amount of 0.05 to 0.75 wt%, 0.1 to 0.6 wt%, 0.15 to 0.5 wt%, or even 0.2 to 0.4 wt%. It will be evident that the mycoprotein biomass does not contribute to the level of plant protein in the frozen confection, since the mycoprotein biomass provides mycoprotein, which is a fungal protein rather than a plant protein.

Where present, the plant protein is preferably pulse protein, and may be selected from the group consisting of: carob protein, fava bean protein, pea protein, soy protein, and mixtures thereof. Pea protein or soy protein are particularly preferred.

In order to provide a frozen confection which is similar to an ice cream, it is preferred that the frozen confection comprises fat in an amount of 1 wt% to 15 wt%, and preferably in an amount of from 2 wt% to 12 wt%, 3 wt% to 10 wt%, or even from 4 wt% to 8 wt%. The fat is preferably vegetable fat (such as coconut oil, palm oil, palm kernel oil, or a mixture thereof), and it is particularly preferred that the fat is coconut oil.

The frozen confection preferably comprises sugars in an amount of 10 wt% to 30 wt%. Sugars are used in almost all types of frozen confection and have two major functions: delivering sweetness and controlling the amount of ice. As used herein the term "sugars" includes monosaccharides and disaccharides. Monosaccharides include glucose, fructose, galactose and mannose. Disaccharides include sucrose, lactose and trehalose. Some ingredients commonly included in frozen confections may contribute to the amount of sugars. An example is corn syrup (sometimes called glucose syrup) - which is a mixture of monosaccharides, disaccharides and oligosaccharides. Furthermore, as discussed above, the mycoprotein biomass may contribute to the sugars present in the frozen confection.

High concentrations of sugars may contribute unwanted sweetness and or calories to the frozen confection. Therefore, the amount of sugars in the frozen confection is no more than 30 wt%, preferably no more than 28 wt%, no more than 25 wt%, or no more than 22 wt%. Conversely, low concentrations of sugars may be inappropriate if the frozen confection is a scoopable product, since a low concentration of sugars tend to result in frozen confections with a high ice content. Therefore, the amount of sugars in the frozen confection is at least 10 wt%, preferably at least 12 wt%, at least 15 wt%, or at least 20 wt%.

The frozen confection preferably comprises an emulsifier or a mixture of emulsifiers (such as mono-diglycerides and the like). For example, the frozen confection may comprise emulsifier in an amount of 0.05 wt% to 1 wt%, 0.1 wt% to 0.75 wt%, or 0.15 wt% to 0.5 wt%.

The frozen confection preferably comprises at least one stabilizer. The stabilizer is preferably selected from the group consisting of: locust bean gum, xanthan gum, guar gum, carrageenan, tara gum, and mixtures thereof (for example, a mixture of locust bean gum and guar gum). The amount of stabiliser in the frozen confection is preferably 0.05 wt% to 1 wt%, 0.1 wt% to 0.75 wt%, or 0.15 wt% to 0.5 wt%.

In a particularly preferred embodiment, the non-dairy frozen confection comprises:

- fat in an amount of 3 to 10 wt%;
- sugars in an amount of 15 to 25 wt%;
- optionally, emulsifier in an amount of 0.05 to 1 wt%;
- optionally, stabilizer in an amount of 0.05 to 1 wt%; and
- mycoprotein biomass in an amount of 0.25 to 1.5 wt%, wherein the mycoprotein biomass comprises mycoprotein fibrils having a fibril length of less than 50 μm, and preferably 10 to 30μm.

The frozen confection may optionally comprise non-nutritive sweetener, such as aspartame, acesulfame K, erythritol, sucralose, or one or more steviol glycosides such as rebaudioside A. Mixtures of two or more non-nutritive sweeteners may also be used.

The frozen confection may optionally comprise colours and/or flavours.

The frozen confection is preferably aerated. As used herein the term "aerated" means that the confection has an overrun of at least 30%. Preferably the aerated frozen confection has an overrun of at least 50%, or even at least 60%. The maximum overrun of the aerated frozen confection is typically no more than 150%. Indeed, a maximum overrun of 120%, or even 110% is typically preferred. Overrun (with unit "%") is defined by the following equation:

$$overrun = \frac{volume\ of\ aerated\ product - volume\ of\ initial\ mix}{Volume\ of\ initial\ mix} \times 100\%$$

Overrun is measured at ambient temperature (20°C) and atmospheric pressure.

The frozen confections of the present invention can be manufactured by any suitable method. The non-dairy frozen confection is typically made by freezing a premix (preferably a pasteurised premix) of ingredients such as water, fat, sugars, mycoprotein biomass, and optionally other ingredients such as plant protein, emulsifiers, stabilizers, colours and flavours.

The frozen confection may optionally comprise further components, which include but are not limited to: inclusions, sauces, and/or toppings. Further components (where present) are usually added after the premix has been frozen.

A convenient way to produce mycoprotein fibrils having a fibril length of less than 50 μm is to microfluidise a suspension of mycoprotein biomass. Thus, it is preferred that the non-dairy frozen confection is prepared by a process comprising the following steps:

(a) microfluidising a suspension of mycoprotein biomass to provide mycoprotein biomass that comprises mycoprotein fibrils having a fibril length of less than 50 μm;
(b) combining the mycoprotein biomass with one or more additional frozen confection ingredients to provide a frozen confection premix; and
(c) freezing the premix.

The mycoprotein biomass of step (a) is conveniently provided in the form of a paste or a dough (for example a frozen paste or a frozen dough) and diluted to provide a suspension of mycoprotein biomass. The mycoprotein biomass is typically diluted with water to provide the suspension. For example, the suspension of mycoprotein biomass may preferably comprise mycoprotein biomass in an amount of 10 to 30 wt% and water in an amount of 70 to 90 wt%.

In step (b) of the above process, the mycroprotein biomass is combined with one or more additional frozen confection ingredients to provide a frozen confection premix. The one or more additional frozen confection ingredients preferably comprise fat. Where this is the case, step (b) will usually comprise a homogenisation step to provide an oil-in-water emulsion (i.e. the frozen confection premix is an oil-in-water emulsion).

The additional frozen confection ingredients may be any or all of the ingredients described above, such as fat, sugars, plant protein, emulsifiers, stabilizers, colours and flavours.

In one embodiment, step (b) comprises:

(i) combining sugars, mycoprotein biomass that comprises mycoprotein fibrils having a fibril length of less than 50 μm, and optionally plant protein with water; and then
(ii) adding fat;

wherein step (ii) preferably involves homogenisation.

In an alternative embodiment, which is thought to improve certain physical and/or sensorial properties of the final frozen confection, step (b) comprises:

(i) combining sugars and optionally plant protein with water; and then
(ii) adding fat; and then
(iii) adding the mycoprotein biomass that comprises mycoprotein fibrils having a fibril length of less than 50 μm.

This alternative embodiment is particularly preferred where the frozen confection comprises plant protein in addition to mycoprotein biomass.

Finally, the invention relates to use of mycoprotein biomass to prepare a frozen confection, wherein the mycoprotein biomass comprises mycoprotein fibrils having a fibril length of less than 50 $\mu$m.

As used herein the term frozen confection means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

Numerical ranges expressed in the format "from x to y" are understood to include x and y, and in specifying any range of values or amounts, any particular upper value or amount can be associated with any particular lower value or amount. Unless otherwise specified, wt% refers to weight percent based on the weight of the entire formulation (including water).

Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

**Figures**

By way of example, the present invention is illustrated with reference to the following figures, in which:

Figure 1 shows confocal images of a suspension of mycoprotein biomass.
Figures 2 and 3 show the results of sensory analysis of samples from Example 3.

**Examples**

The examples are intended to illustrate the invention and are not intended to limit the invention to those examples *per se.*

*Confocal microscopy*

Samples were imaged on a Zeiss LSM confocal microscope in channel mode. Nile Blue was used to stain fat and protein (excitation wavelengths of 488 nm and 633 nm, respectively). Calcofluor white was used to stain cellulose (excitation wavelength 405 nm). Emission wavelengths for the three channels were collected at 415-455 nm, 490-550 nm, and 640-760 nm. Images were viewed with ZEN Black software.

*Overrun*

Overrun was measured at ambient temperature (20°C) and atmospheric pressure, and calculated using the following equation:

$$overrun = \frac{\text{volume of aerated product - volume of initial mix}}{\text{Volume of initial mix}} \times 100\%$$

*Temperature abuse*

Frozen confections were subjected to temperature abuse in order to mimic the thermal regimes that may be encountered during distribution and storage. This involved storing samples in a temperature-controlled cabinet for 14 days, where the temperature of the cabinet was cycled (-20°C for 12 hours, -10°C for 12 hours). Following the 14 day regime, the samples were stored in a freezer for several days before testing.

*Meltdown*

Meltdown was measured for samples which had undergone temperature abuse. Blocks of frozen confection products (approximately 100 ml) were equilibrated at -22°C, weighed and then added to the centre a grated metal plate suspended above a mass balance. Samples were analysed in a cabinet at 20°C, with the mass of the melted product that passed through the grating being recorded over time for 2 hours.

### Example 1

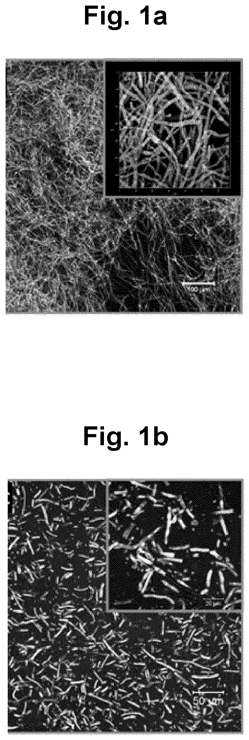

Mycoprotein biomass (ABUNDA, obtained as a frozen dough from Enough Foods) was defrosted and dispersed in water with mixing to provide a suspension. The suspension contained mycoprotein biomass in an amount of -3.75 wt%. The suspension was microfluidised at 1000 bars. Figure 1 shows confocal images of the mycoprotein biomass suspension. Figure 1a is the suspension after mixing, and Figure 1b is the suspension after mixing and microfluidisation. Figure 1a shows that after mixing, the mycoprotein biomass consists of long strands of fibrous material with a clumped network. Figure 1b shows microfluidisation reduces the fibril length to give 10 to 30 μm fragments.

### Example 2

Frozen confections containing different levels (0.25 to 3 wt%) of the mycoprotein biomass of Example 1 were prepared. The premix formulations are shown in Table 1. The amount of mycoprotein biomass specified is the dry weight (e.g. 0.75% mycoprotein biomass is equivalent to adding 200 g of the 3.75 wt% microfluidised suspension per 1 kg of frozen confection premix).

**Table 1: non-dairy frozen confection premix formulations**

| Ingredient (wt%) | Sample | | | |
|---|---|---|---|---|
| | 1 | 2 | 3 | A |
| Coconut oil | 5 | 5 | 5 | 5 |
| Mycoprotein biomass | 0.25 | 0.75 | 1.25 | 3 |
| Sucrose | 14 | 14 | 14 | 18 |
| Glucose syrup (DE 28, DE 63) | 17 | 17 | 17 | - |
| Stabilizer (E410, E412) | 0.3 | 0.3 | 0.3 | 0.3 |
| Emulsifier (E417) | 0.16 | 0.16 | 0.16 | 0.3 |
| Flavour | 0.22 | 0.22 | 0.22 | - |
| Water | to 100 | to 100 | to 100 | to 100 |

Briefly, the ingredients (excluding coconut oil) were combined and mixed with heating (60°C to 75°C), followed by addition of the coconut oil and further mixing. The premixes were pasteurised and homogenised, and then aged overnight at 4°C. After the ageing step, the premixes were frozen using a benchtop ice cream maker.

*Physical properties*

The overrun was measured for each of the frozen confections. As can be seen from the data in Table 2, Samples 1 to 3 all achieved a good overrun (especially given that they were prepared using a benchtop ice cream maker). In contrast, Sample A achieved a notably lower overrun than Samples 1 to 3.

**Table 2: physical properties**

| | Sample 1 | Sample 2 | Sample 3 | Sample A |
|---|---|---|---|---|
| **Mycoprotein biomass (wt%)** | 0.25 | 0.75 | 1.25 | 3 |
| **Overrun (%)** | 70 | 96 | 87 | 47 |

*Sensorial properties*

Informal tasting of the frozen confections indicated that samples containing mycoprotein biomass tended to have a creamy, mouth-coating consistency. However, Sample A (mycoprotein biomass = 3 wt%) was judged to taste unpleasant (savoury, bitter), despite having a creamy consistency. Samples 1 and 2 did not possess any significant off flavour, and Sample 3 (mycoprotein biomass = 1.25 wt%) had some slight off flavour notes. The texture of Samples 2 and 3 was better than that of Sample 1 (mycoprotein biomass = 0.25 wt%). Sample 2 (mycoprotein biomass = 0.75 wt%) had both a good texture and no significant off flavour.

## Example 3

Further non-dairy frozen confections were prepared. Two different methods were used to prepare the frozen confections:

*Method A:* The ingredients (excluding coconut oil) were combined and mixed with heating (60°C to 75°C), followed by addition of the coconut oil and further mixing. The premixes were pasteurised and homogenised, and then aged overnight at 4°C. After the ageing step, the premixes were frozen using a benchtop ice cream maker.

*Method B:* The ingredients (excluding coconut oil and the mycoprotein biomass) were combined and mixed with heating (60°C to 75°C), followed by addition of the coconut oil and further mixing to form a coarse emulsion. The mycoprotein biomass was added to the coarse emulsion, which was subsequently pasteurised and homogenised, and then aged overnight at 4°C. After the ageing step, the premixes were frozen using a benchtop ice cream maker.

The premix formulations are shown in Table 3. Sample B was a soy-based frozen confection, and Sample 4 contained soy protein together with mycoprotein biomass from Example 1. Sample 5 had the same formulation as Sample 2 from Example 2.

**Table 3: non-dairy frozen confection premix formulations**

| Ingredient (wt%) | Sample B | Sample 4 | Sample 5 |
|---|---|---|---|
| Coconut oil | 5 | 5 | 5 |
| Mycoprotein biomass | - | 0.75 | 0.75 |
| Soy protein | 0.4 | 0.2 | - |
| Sucrose | 14 | 14 | 14 |
| Glucose syrup (DE 28, DE 63) | 17 | 15 | 17 |
| Stabilizer (E410, E412) | 0.3 | 0.3 | 0.3 |
| Emulsifier (E417) | 0.16 | 0.16 | 0.16 |
| Flavour | 0.22 | 0.22 | 0.22 |
| Water | to 100 | to 100 | to 100 |

*Physical properties*

The overrun and meltdown properties of the frozen confections were measured using the methods described above. The results are summarised in Table 4.

**Table 4: physical properties**

| | Sample 4 | | Sample 5 | |
|---|---|---|---|---|
| | Method A | Method B | Method A | Method B |
| **Overrun (%)** | 77 | 97 | 80 | 96 |
| **Meltdown (%)** | 27 | 18 | 30 | - |

Both methods provided frozen confections with a good overrun. However, Method B was consistently found to provide frozen confections having a higher overrun than Method A. Similarly, both methods provided frozen confections which were resilient to meltdown (losing ≤ 30% in mass). Sample 4 showed improved meltdown when prepared using Method B than when prepared using Method A. There was little difference in overrun achieved or meltdown behaviour between Sample 4 and Sample 5, indicating that the addition of soy protein did not have a significant impact on the physical properties of the frozen confections. However, confocal microscopy indicated that the addition of soy protein resulted in a smaller fat droplet size, particularly when Method B was used.

*Sensorial properties*

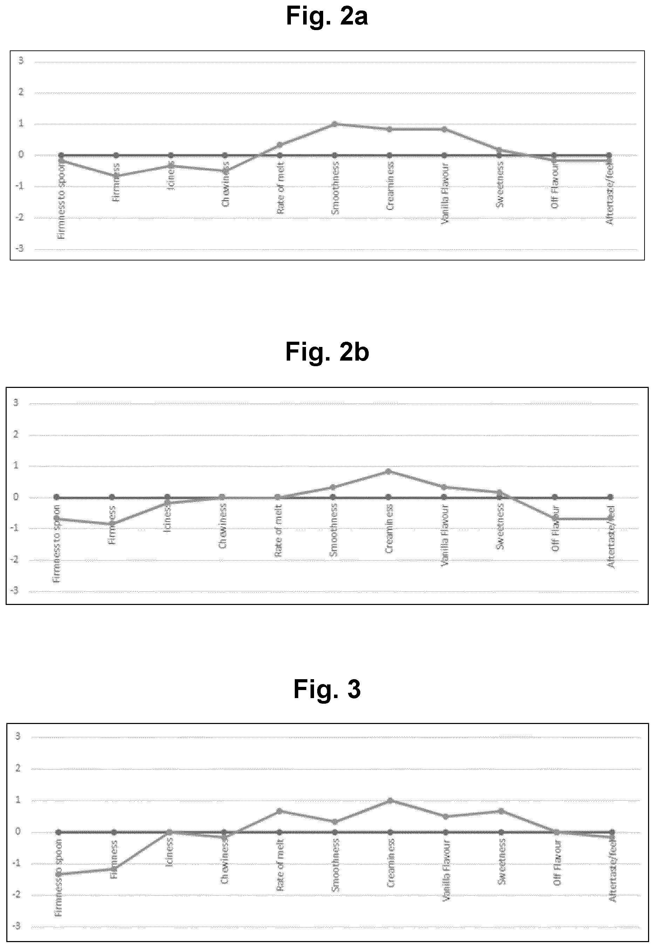

Sensory analysis of the samples was conducted by 6 panellists. The results of the comparison between Sample 5 and Sample B are shown in Figure 2. Figure 2a shows the comparison of fresh samples, whilst Figure 2b shows the comparison of samples which had undergone temperature abuse prior to being assessed. The flat baseline (i.e. 0 on the y-axis) represents Sample B. The sample containing mycoprotein biomass (Sample 5) had a smoother and creamier texture than the soy control (Sample B), irrespective of whether the sample had been subjected to temperature abuse. The sample containing mycoprotein biomass (Sample 5) was perceived to have a lower level of off-flavour and aftertaste, and a better vanilla flavour than the soy control (Sample B). The flavour effects were more pronounced in the samples that had been subjected to temperature abuse.

The results of the comparison between Sample 4 and Sample B are shown in Figure 3. The flat baseline (i.e. 0 on the y-axis) represents Sample B. Both of these samples had undergone temperature abuse prior to being assessed. The samples had a similar flavour profile, with the inclusion of mycoprotein biomass resulting in a smoother and creamier texture.

In all cases, the frozen confections prepared using Method B were judged to be less firm and less icy than those prepared using Method A. In addition, Method B was judged to produce frozen confections with a smoother texture than Method A.

**Claims**

1. Non-dairy frozen confection comprising mycoprotein biomass in an amount of 0.1 to 2.5 wt%, wherein the mycoprotein biomass comprises mycoprotein fibrils having a fibril length of less than 50 $\mu$m.

2. Non-dairy frozen confection as claimed in claim 1 comprising the mycoprotein biomass in an amount of 0.25 to 2 wt%.

3. Non-dairy frozen confection as claimed in claim 1 or claim 2, wherein the fibril length is 10 to 30 $\mu$m.

4. Non-dairy frozen confection as claimed in any one of claims 1 to 3, and additionally comprising plant protein in an amount of 0.05 to 0.75 wt%.

5. Non-dairy frozen confection as claimed in claim 4, wherein the plant protein is pulse protein, preferably selected from the group consisting of: carob protein, fava bean protein, pea protein, soy protein, and mixtures thereof.

6. Non-dairy frozen confection as claimed in claim 4 or claim 5, wherein the plant protein is soy protein.

7. Non-dairy frozen confection as claimed in any one of claims 1 to 6, wherein the frozen confection comprises fat in an amount of 1 wt% to 15 wt%.

8. Non-dairy frozen confection as claimed in any one of claims 1 to 7, wherein the frozen confection comprises sugars in an amount of 10 wt% to 30 wt%.

9. Non-dairy frozen confection as claimed in any one of claims 1 to 8, wherein the frozen confection is an aerated frozen confection having an overrun of 50 to 120%.

10. Non-dairy frozen confection as claimed in any one of claims 1 to 9, wherein the frozen confection comprises:

 • fat in an amount of 3 to 10 wt%;
 • sugars in an amount of 15 to 25 wt%;
 • emulsifier in an amount of 0.05 to 1 wt%;
 • stabiliser in an amount of 0.05 to 1 wt%; and
 • the mycoprotein biomass in an amount of 0.25 to 1.5 wt%

11. Process for preparing a non-dairy frozen confection as claimed in any one of claims 1 to 10 comprising the steps of:

 (a) microfluidising a suspension of mycoprotein biomass to provide mycoprotein biomass that comprises mycoprotein fibrils having a fibril length of less than 50 $\mu$m;
 (b) combining the mycoprotein biomass with one or more additional frozen confection ingredients to provide a frozen confection premix; and

(c) freezing the premix.

**12.** Process as claimed in claim 11, wherein the one or more additional frozen confection ingredients comprise fat, and step (b) comprises a homogenisation step.

**13.** Process as claimed in claim 11 or claim 12, wherein the mycoprotein biomass of step (a) is provided in the form of a paste or a dough and diluted to provide the suspension.

**14.** Process as claimed in any one of claims 11 to 13, wherein step (b) comprises:

(i) combining sugars and optionally plant protein with water; and then
(ii) adding fat; and then
(iii) adding the mycoprotein biomass that comprises mycoprotein fibrils having a fibril length of less than 50 $\mu$m.

**15.** Use of mycoprotein biomass to prepare a frozen confection, wherein the mycoprotein biomass comprises mycoprotein fibrils having a fibril length of less than 50 $\mu$m.

# Fig. 1a

# Fig. 1b

# Fig. 2a

# Fig. 2b

# Fig. 3

Europäisches
Patentamt

European
Patent Office

Office européen
des brevets

# EUROPEAN SEARCH REPORT

**Application Number**

EP 23 19 1677

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 635 492 B2 (MARLOW FOODS LTD [GB]) 22 December 2009 (2009-12-22) * claims 1-15; example 7; table 10 * | 15 | INV. A23G9/36 A23G9/38 A23G9/04 A23J3/20 A23L29/00 A23L33/195 A23C11/06 A23J1/00 |
| X | US 2022/240557 A1 (KAWABATA JESSICA OKANE [US] ET AL) 4 August 2022 (2022-08-04) * paragraphs [0004], [0190], [0197]; claims 1-30; example 9 * | 1-15 | |
| A | US 8 206 770 B2 (ALDRED DEBORAH LYNNE [GB]; BERRY MARK JOHN [GB] ET AL.) 26 June 2012 (2012-06-26) * column 4, line 33 – line 36; claims 1-13 * | 1-15 | ADD. A23G9/46 A23L33/185 |
| A | ASHOK R PATEL: "Functional and Engineered Colloids from Edible Materials for Emerging Applications in Designing the Food of the Future", ADVANCED FUNCTIONAL MATERIALS, WILEY – V C H VERLAG GMBH & CO. KGAA, DE, vol. 30, no. 18, 19 December 2018 (2018-12-19), page n/a, XP072409494, ISSN: 1616-301X, DOI: 10.1002/ADFM.201806809 * page 7, column 1 * | 11-14 | |
| A | WO 2022/203577 A1 (AAK AB [SE]) 29 September 2022 (2022-09-29) * page 20, line 14 – line 19; claims 1-54 * | 4-6 | |

**TECHNICAL FIELDS SEARCHED (IPC)**

A23G
A23J
A23L
A23C

The present search report has been drawn up for all claims

| Place of search | Date of completion of the search | Examiner |
|---|---|---|
| Munich | 22 January 2024 | Prieto Mota, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 1677

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2024

| Patent document cited in search report | | | Publication date | Patent family member(s) | | | Publication date |
|---|---|---|---|---|---|---|---|
| US 7635492 | B2 | | 22-12-2009 | GB | 2375943 | A | 04-12-2002 |
| | | | | GB | 2390527 | A | 14-01-2004 |
| | | | | US | 2004185162 | A1 | 23-09-2004 |
| | | | | US | 2010213293 | A1 | 26-08-2010 |
| | | | | WO | 02090527 | A1 | 14-11-2002 |
| US 2022240557 | A1 | | 04-08-2022 | AR | 124735 | A1 | 26-04-2023 |
| | | | | AU | 2022213416 | A1 | 07-09-2023 |
| | | | | BR | 112023015278 | A2 | 07-11-2023 |
| | | | | CA | 3206083 | A1 | 04-08-2022 |
| | | | | CN | 117098555 | A | 21-11-2023 |
| | | | | EP | 4284436 | A1 | 06-12-2023 |
| | | | | GB | 2618758 | A | 15-11-2023 |
| | | | | IL | 304684 | A | 01-09-2023 |
| | | | | KR | 20230138953 | A | 05-10-2023 |
| | | | | TW | 202245622 | A | 01-12-2022 |
| | | | | US | 2022240557 | A1 | 04-08-2022 |
| | | | | US | 2022386666 | A1 | 08-12-2022 |
| | | | | WO | 2022165306 | A1 | 04-08-2022 |
| US 8206770 | B2 | | 26-06-2012 | AT | E358996 | T1 | 15-05-2007 |
| | | | | AT | E390855 | T1 | 15-04-2008 |
| | | | | AU | 2005266664 | A1 | 02-02-2006 |
| | | | | AU | 2005266665 | A1 | 02-02-2006 |
| | | | | BR | PI0513602 | A | 13-05-2008 |
| | | | | BR | PI0513613 | A | 13-05-2008 |
| | | | | CA | 2575319 | A1 | 02-02-2006 |
| | | | | CA | 2575325 | A1 | 02-02-2006 |
| | | | | CN | 101026968 | A | 29-08-2007 |
| | | | | CN | 101039596 | A | 19-09-2007 |
| | | | | DE | 602005000861 | T2 | 30-08-2007 |
| | | | | DE | 602005005743 | T2 | 07-05-2009 |
| | | | | EP | 1623631 | A1 | 08-02-2006 |
| | | | | EP | 1773139 | A1 | 18-04-2007 |
| | | | | EP | 1819242 | A1 | 22-08-2007 |
| | | | | ES | 2285631 | T3 | 16-11-2007 |
| | | | | IL | 180670 | A | 31-07-2011 |
| | | | | IL | 180671 | A | 31-05-2012 |
| | | | | JP | 4709216 | B2 | 22-06-2011 |
| | | | | JP | 4723581 | B2 | 13-07-2011 |
| | | | | JP | 5175326 | B2 | 03-04-2013 |
| | | | | JP | 2008507958 | A | 21-03-2008 |
| | | | | JP | 2008507959 | A | 21-03-2008 |
| | | | | JP | 2011041583 | A | 03-03-2011 |
| | | | | JP | 2011041584 | A | 03-03-2011 |
| | | | | MY | 143590 | A | 31-05-2011 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.** EP 23 19 1677

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2024

| Patent document cited in search report | Publication date | Patent family member(s) | | Publication date |
|---|---|---|---|---|
| | | NZ | 552893 A | 30-10-2009 |
| | | NZ | 552894 A | 30-10-2009 |
| | | US | 2006024417 A1 | 02-02-2006 |
| | | US | 2006024419 A1 | 02-02-2006 |
| | | US | 2013071529 A1 | 21-03-2013 |
| | | US | 2013071539 A1 | 21-03-2013 |
| | | WO | 2006010425 A1 | 02-02-2006 |
| | | WO | 2006010426 A1 | 02-02-2006 |
| WO 2022203577 A1 | 29-09-2022 | AU | 2022245005 A1 | 02-11-2023 |
| | | BR | 112023019338 A2 | 12-12-2023 |
| | | CA | 3213078 A1 | 29-09-2022 |
| | | CN | 117222321 A | 12-12-2023 |
| | | EP | 4312571 A1 | 07-02-2024 |
| | | WO | 2022203577 A1 | 29-09-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02089604 A2

**Non-patent literature cited in the description**

- **H. DOUGLAS GOFF** ; **RICHARD W. HARTEL**. Ice Cream. 2013